# EUROPÄISCHE PATENTANMELDUNG

(11) **EP 2 942 301 A1**
(43) Veröffentlichungstag der Anmeldung: **11.11.2015**
(21) Anmeldenummer: 15166665.8
(22) Anmeldetag: 06.05.2015
(51) Int. Cl.: B65B 59/04, F16M 1/00

(54) **VORRICHTUNG ZUM AUFBAU VOM MASCHINEN**

(30) Priorität: 07.05.2014 DE 102014106333
(71) Anmelder: Pester Pac Automation GmbH, 87787 Wolfertschwenden (DE)
(72) Erfinder: Haug, Hans, 87730 Bad Grönenbach (DE)
(74) Vertreter: Hutzelmann, Gerhard

(57) **Zusammenfassung**

Vorrichtung (1) zum Aufbau von Maschinen, insbesondere von Verpackungsmaschinen, wobei ein Tragrahmen (3) vorgesehen ist, auf dem die Maschine aufgebaut ist, wobei der Tragrahmen auf Füßen (7) ruhen kann, die ihrerseits einstellbar ausgebildet sein können.

## Beschreibung

Die Erfindung bezieht sich auf eine Vorrichtung zum Aufbau von Maschinen, insbesondere von Verpackungsmaschinen.

Maschinen und insbesondere Verpackungsmaschinen werden in der Regel jeweils individuell mit großem Aufwand konstruiert und gefertigt.

Dadurch sind diese zwar auf den jeweiligen Einsatzzweck anpassbar, allerdings ist der Aufbau jedes Mal aufwendig.

Aufgabe der Erfindung ist es, einen Standardaufbau zu schaffen, der aber individuell und flexibel anpassbar ist.

Zudem sollen standardisierte Flächeneinheiten nutzbar sein.

Eine leicht zu reinigende Ausführung, vor allem für den Phanna-Bereich ist wünschenswert.

Diese Aufgabe wird erfindungsgemäß dadurch gelöst, daß ein Tragrahmen vorgesehen ist, auf dem die Maschine aufgebaut ist, wobei der Tragrahmen auf Füßen ruhen kann, die ihrerseits einstellbar ausgebildet sein können.

Auf diesem Tragrahmen werden die einzelnen Teile der Maschine angeordnet.

Dabei hat es sich als sehr vorteilhaft erwiesen, wenn der Tragrahmen als umlaufendes Traggestell ausgeführt ist, wobei der Tragrahmen eine quadratische oder rechteckige Form einnehmen kann.

Die quadratische bzw. rechteckige Form hat sich als besonders flexibel erwiesen.

Eine weitere sehr vorteilhafte Ausgestaltung der Erfindung liegt vor, wenn an den Ecken des Tragrahmens senkrechte Stützen vorgesehen sind.

An diesen Stützen können weitere Maschinenteile angebracht werden. Zudem begrenzen diese den Arbeitsraum der jeweiligen Maschine.

Sehr vorteilhaft ist es erfindungsgemäß auch, wenn ein oberer Rahmen vorgesehen ist, der die senkrechten Stützen miteinander verbindet.

An diesem oberen Rahmen lassen sich beispielsweise Roboterarme anbringen.

Äußerst vorteilhaft ist es erfindungsgemäß auch, wenn wenigstens ein Teil der Stützen und/oder Rahmen hohl ausgebildet sind.

Hohlprofile sind sehr stabil.

Eine sehr vorteilhafte Fortbildung der Erfindung ist auch darin zu sehen, daß wenigstens ein Teil der Stützen und/oder Rahmen als U- oder C-förmige Profile ausgebildet sind.

Hierdurch können sehr leicht Maschinenteile, Streben oder sonstiges Zubehör befestigt werden.

Es hat sich auch als sehr vorteilhaft erwiesen, wenn in den Stützen und/oder Rahmen Befestigungen und/oder Trageinrichtungen für Kabel, Druckluftleitungen oder dergleichen vorgesehen sind.

Hierdurch können diese Leitungen platzsparend und sauber verlegt werden.

Eine weitere sehr vorteilhafte Ausgestaltung der Erfindung liegt darin, daß zwischen den Stützen Wandelemente, vorzugsweise transparente Wandelemente vorgesehen sind, die aus Glas gefertigt sein können.

Damit ist ein versehentlicher Eingriff eines Bedieners in den Arbeitsraum der Maschine unterbunden. Eine Verletzungsgefahr ist ausgeschlossen.

Sehr vorteilhaft ist es dabei auch, wenn wenigstens eine Türe zwischen zwei benachbarten Stützen vorgesehen ist.

Über die Türe kann zu Wartungsarbeiten der Innenraum der Maschine geöffnet werden.

Als sehr vorteilhaft hat es sich erfindungsgemäß auch erwiesen, wenn ein Bedientableau oder dergleichen an der Außenseite vorgesehen ist.

Hierüber kann die jeweilige Maschine gesteuert und überwacht werden. Selbstverständllich sind auch externe Bedienungseinheiten denkbar.

Ebenfalls sehr vorteilhaft ist es erfindungsgemäß, wenn Maschinenteile an den Stützen und/oder Rahmen befestigt sind, wobei die Befestigung bevorzugt durch Klemmverbindungen erfolgen kann.

Mit einer Klemmbefestigung lassen sich die Maschinenteile sehr leicht und schnell positionieren, aber dennoch sicher befestigen. Auch Streben, Zwischenböden oder dergleichen können so befestigt werden.

Äußerst vorteilhaft ist es erfindungsgemäß auch, wenn eine Steuereinheit vorgesehen ist, die im Bereich des unteren Rahmens und/oder als separate Einheit vorgesehen ist.

Hierdurch kann die Steuereinheit maschinennah platziert werden.

Eine weitere sehr vorteilhafte Ausgestaltung der Erfindung liegt vor, wenn mehrere Vorrichtungen miteinander zu einer Gesamtvorrichtung verbunden sind.

Damit lässt sich jeweils ein Mehrfaches des Raumes einer Vorrichtung zur Verfügung stellen.

Eine äußerst vorteilhafte Weiterbildung der Erfindung liegt auch dann vor, wenn wenigstens eine Sicherheitseinrichtung vorgesehen ist, die beispielsweise einen Bediener vor Verletzungen zu schützen vermag.

Hiermit wird beispielsweise ein unkontrolliertes Betreten des Maschinenraumes verhindert. Über einen Sicherheitskontakt kann die Maschine abgeschaltet werden.

Als sehr vorteilhaft hat es sich auch erwiesen, wenn Tragrahmen, Stützen, oberer Rahmen und/oder Füße mit im Wesentlichen glatten Oberflächen versehen sind.

Diese glatten Oberflächen lassen sich sehr gut sauber halten, was gerade im Pharma-Bereich äußerst wichtig ist.

Eine weitere sehr vorteilhafte Fortbildung der Erfindung liegt auch vor, wenn die Füße aus wenigstens zwei ineinander einschiebbaren Teilen ausgebildet sind, die sich über einen Stellmechanismus gegeneinander verschieben lassen, wobei der Stellmechanismus als Einstellschraube ausgeführt sein kann.

Damit wird ein flexibel einstellbarer Fuß geschaffen, der trotz seiner Einstellbarkeit keine relevanten Verschmutzungsprobleme zeigt.

Im folgenden wird die Erfindung anhand eines Ausführungsbeispiels veranschaulicht.

Dabei zeigen:
- Fig. 1: ein Schaubild einer erfindungsgemäßen Vorrichtung mit einem Tragrahmen, vier Stützen und einem oberen Rahmen,

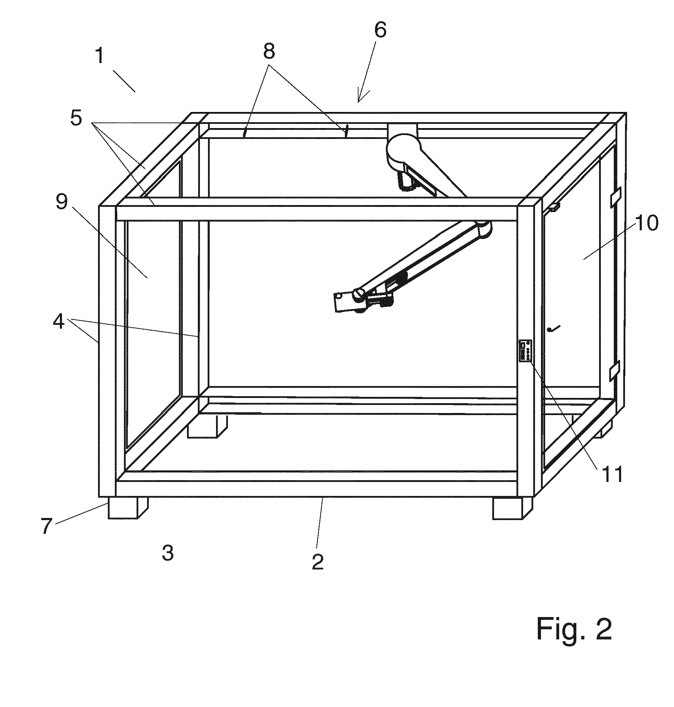

- Fig. 2: ein Schaubild derselben Vorrichtung mit angebauten Teilen einer Verpackungsmaschine,

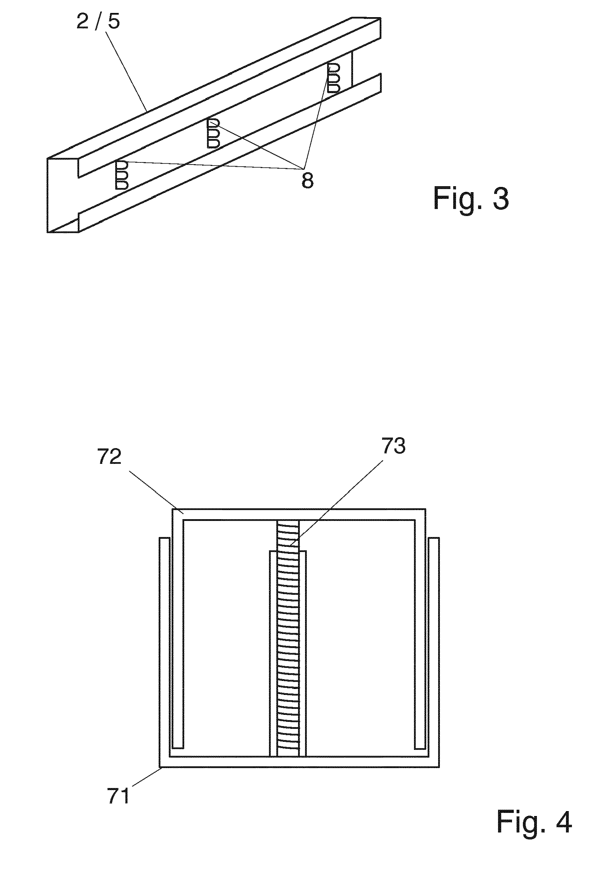

- Fig. 3: eine Detailansicht eines C-förmigen Trägers, der für den Tragrahmen, die Stützen und den oberen Rahmen einsetzbar ist, und
- Fig. 4: eine aufgebrochene Ansicht eines Standfußes mit zwei ineinander greifenden Teilen und einer Stellschraube.

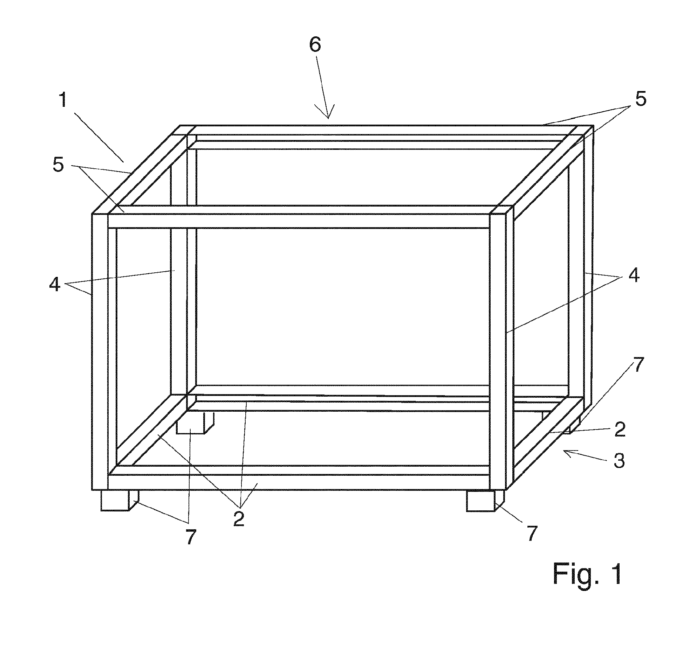

Mit 1 ist in Fig. 1 ein Gestell bezeichnet, das aus einem aus vier Profilen 2 aufgebauten Tragrahmen 3 besteht, auf dem vier Stützen 4 angeordnet sind, die wiederum mit einem aus vier Profilen 5 aufgebauten oberen Rahmen 6 verbunden sind. Der Tragrahmen 3 ruht auf mehreren, hier vier, Füßen 7, die in der Höhe einstellbar ausgebildet sind.

Das Gestell 1 bildet eine Raumeinheit für eine Verpackungsmaschine. Andere Maschinenaufbauten sind denkbar.

Es können mehrere Gestelle 1 miteinander verbunden werden, um eine größere Raumeinheit zu bilden.

Die Profile 2 und 5 können identisch sein.

Im vorliegenden Ausführungsbeispiel sind sowohl für die Profile 2 als auch die Profile 5 C-förmige Profile vorgesehen, die sich jedoch in diesem Fall etwas unterscheiden.

Die Stützen 4 sind hohl ausgeführt. Im Bereich der Profile 2 und 5 sind in den Stützen 4 Öffnungen vorgesehen, die jedoch durch die Profile abgedeckt werden.

Die Öffnung der C-förmigen Profile ist nach innen gerichtet.

In den Profilen 2 und 5 sind Versorgungs- und Steuerleitungen angeordnet. Hierzu sind im Profil Halter 8 angebracht, auf welchen die Leitungen getrennt voneinander oder in Bündeln aufgelegt werden. Auf diese Art und Weise kann man nicht nur die Leitungen sauber verlegen, sondern es werden auch gegenseitige Störeinflüsse vermieden. Es sind dabei auch Tragschienen oder dergleichen denkbar. Wichtig ist, daß die Leitungen geführt sind und an den Haltern 8 befestigt werden können.

Die gesamte Verlegung der Versorgungs- und Steuerleitungen erfolgt dabei weitgehend unsichtbar, da diese vollständig in den Profilen und Stützen verborgen sind und erst, wo es nicht mehr anders möglich ist, zu Tage treten.

Auch in den Stützen 4 können Führungen oder dergleichen für die Leitungen vorgesehen sein. Beim Übergang von den Profilen zu den Stützen 4 verlaufen die Leitungen durch die oben angesprochenen Öffnungen.

Zwischen den Stützen 4 können Wandelemente 9 vorgesehen sein, die im vorliegenden Ausfühnmgsbeispiel als Sicherheitsglasscheiben ausgebildet sind. Diese Wandelemente 9 verhindern einen unbeabsichtigten Zugriff von Personen in den Maschinenraum. Verletzungen und Betriebsstörungen werden so vermieden.

Für Servicezwecke ist in der Regel ein Zugang zum Maschinenraum notwendig. Hierfür ist zwischen zwei benachbarten Stützen 4 ein Wandelement als Türe 10 ausgeführt. Diese Türe 10 wird durch einen Sicherheitsschalter gegen unerwünschtes Öffnen überwacht.

Zusätzlich lassen sich auch Zwischenstreben, Zwischenböden und dergleichen an den Stützen 4, aber auch an den Profilen 2 und 5 befestigen.

So lassen sich nahezu beliebige Befestigungsmöglichkeiten für Teile der Verpackungsmaschine schaffen. So ist es denkbar, daß am oberen Rahmen 6 bzw. an den diesen bildenden Profilen 5 ein Roboterarm befestigt ist, der für das Handling der Verpackungen zuständig ist. Auch alle anderen Bearbeitungsstationen können an der jeweils erforderlichen Stelle angeordnet werden.

Das die Vorrichtung bildende Gestell 1 ist so universell für verschiedenste Maschinen einsetzbar. Alle Maschinen haben aber dennoch ein einheitliches Erscheinungsbild.

An den Stützen 4 kann an der Außenseite auch ein Bedientableau 11 angebracht werden. Dies kann sich aber auch zwischen zwei Stützen erstrecken oder völlig separat angeordnet werden.

Im Bereich ders Tragrahmens 3 kann eine Steuereinheit für die Verpackungsmaschine angeordnet werden. Bei aufwendigeren Steuereinheiten ist diese auch auslagerbar und kann beispielsweise in einem extra Gestell vorgesehen werden. Dabei ist es denkbar, daß eine Steuereinheit für mehrere Maschinen genutzt werden kann.

Zwischen den einzelnen Gestellen 1 kann ein Datenbus vorgesehen werden, so daß diese sehr einfach aneinander ankoppelbar sind. Das bedeutet auch, daß im Servicefall, wenn eine Vorrichtung ausgetauscht werden muss, diese sehr leicht entfernt und durch eine andere ersetzt werden kann. Der Betrieb der Maschine kann schnellstens fortgesetzt werden.

Der Tragrahmen 3 ruht auf Füßen 7.

Diese sind im vorliegenden Ausführungsbeispiel zweiteilig ausgebildet und aus einem Außenfuß 71 und einem Innenfuß 72 aufgebaut. Der Innenfuß 72 ist innerhalb der Außenfußes 71 angeordnet und ruht auf dem Untergrund. Der Außenfuß 71 dagegen ist am Tragrahmen 3 befestigt. Die beiden Teile sind über eine Einstellschraube 73 miteinander verbunden, die beispielsweise durch den Tragrahmen 3 hindurch erreichbar und bedienbar ist.

Durch die Einstellschraube 73 lassen sich Innenfuß 72 und Außenfuß 71 gegeneinander verstellen wodurch das Gestell 1 ausnivelliert werden kann.

Durch das Ineinandergreifen der Fußteile sind diese unanfällig für Verschmutzungen. Ablageflächen, auf denen sich Schmutz, vor allem Staub durch den Betrieb der Verpackungsmaschinen abzulagern vermag sind damit gegenüber herkömmlichen Einstellfüßen beseitigt.

Die gesamten Gestelle 1 sind weitgehend glatt und leicht reinigbar ausgeführt.

Die Öffnungen der C-Profile lassen sich auch noch durch zusätzliche Blenden abdecken, so daß nicht nur die darin verlaufenden Leitungen geschützt sind, sondern auch eine Schmutzablagerung verhindert wird.

## Patentansprüche

1. Vorrichtung zum Aufbau von Maschinen, insbesondere von Verpackungsmaschinen, **dadurch gekennzeichnet, daß** ein Tragrahmen vorgesehen ist, auf dem die Maschine aufgebaut ist, wobei der Tragrahmen auf Füßen ruhen kann, die ihrerseits einstellbar ausgebildet sein können.

2. Vorrichtung nach Anspruch 1, **dadurch gekennzeichnet, daß** der Tragrahmen als umlaufendes Traggestell ausgeführt ist, wobei der Tragrahmen eine quadratische oder rechteckige Form einnehmen kann.

3. Vorrichtung nach Anspruch 1 oder 2, **dadurch gekennzeichnet, daß** an den Ecken des Tragrahmens senkrechte Stützen vorgesehen sind.

4. Vorrichtung nach Anspruch 1, 2 oder 3, **dadurch gekennzeichnet, daß** ein oberer Rahmen vorgesehen ist, der die senkrechten Stützen miteinander verbindet.

5. Vorrichtung nach einem der vorangehenden Ansprüche, **dadurch gekennzeichnet, daß** wenigstens ein Teil der Stützen und/oder Rahmen hohl ausgebildet sind.

6. Vorrichtung nach einem der vorangehenden Ansprüche, **dadurch gekennzeichnet, daß** wenigstens ein Teil der Stützen und/oder Rahmen als U- oder C-förmige Profile ausgebildet sind.

7. Vorrichtung nach einem der vorangehenden Ansprüche, **dadurch gekennzeichnet, daß** in den Stützen und/oder Rahmen Befestigungen und/oder Trageinrichtungen für Kabel, Druckluftleitungen oder dergleichen vorgesehen sind.

8. Vorrichtung nach einem der vorangehenden Ansprüche, **dadurch gekennzeichnet, daß** zwischen den Stützen Wandelemente, vorzugsweise transparente Wandelemente vorgesehen sind, die aus Glas gefertigt sein können.

9. Vorrichtung nach einem der vorangehenden Ansprüche, **dadurch gekennzeichnet, daß** wenigstens eine Türe zwischen zwei benachbarten Stützen vorgesehen ist.

10. Vorrichtung nach einem der vorangehenden Ansprüche, **dadurch gekennzeichnet, daß** ein Bedientableau oder dergleichen an der Außenseite vorgesehen ist.

11. Vorrichtung nach einem der vorangehenden Ansprüche, **dadurch gekennzeichnet, daß** Maschinenteile an den Stützen und/oder Rahmen befestigt sind, wobei die Befestigung bevorzugt durch Klemmverbindungen erfolgen kann.

12. Vorrichtung nach einem der vorangehenden Ansprüche, **dadurch gekennzeichnet, daß** eine Steuereinheit vorgesehen ist, die im Bereich des unteren Rahmens und/oder als separate Einheit vorgesehen ist.

13. Vorrichtung nach einem der vorangehenden Ansprüche, **dadurch gekennzeichnet, daß** mehrere Vorrichtungen miteinander zu einer Gesamtvorrichtung verbunden sind.

14. Vorrichtung nach einem der vorangehenden Ansprüche, **dadurch gekennzeichnet, daß** wenigstens eine Sicherheitseinrichtung vorgesehen ist, die beispielsweise einen Bediener vor Verletzungen zu schützen vermag.

15. Vorrichtung nach einem der vorangehenden Ansprüche, **dadurch gekennzeichnet, daß** Tragrahmen, Stützen, oberer Rahmen und/oder Füße mit im Wesentlichen glatten Oberflächen versehen sind.

16. Vorrichtung nach einem der vorangehenden Ansprüche, **dadurch gekennzeichnet, daß** die Füße aus wenigstens zwei ineinander einschiebbaren Teilen ausgebildet sind, die sich über einen Stellmechanismus gegeneinander verschieben lassen, wobei der Stellmechanismus als Einstellschraube ausgeführt sein kann.
